# DEMANDE DE BREVET EUROPEEN

(11) **EP 1 199 679 A1**
(43) Date de publication de la demande: **24.04.2002**
(21) Numéro de dépôt: 01420208.9
(22) Date de dépôt: 16.10.2001
(51) Int. Cl.: G07B 13/00

(54) **Procédé pour éviter les fraudes sur un taxi équipé d'un taximètre électronique**

(30) Priorité: 20.10.2000 FR 0013439; 13.11.2000 FR 0014549
(71) Demandeur: Automatisme et Techniques Avancees, 13710 La Barque (FR)
(72) Inventeur: Richard, Claude, Glencoe, 60022 Illinois (US)
(74) Mandataire: Palix, Stéphane

(57) **Abrégé**

Procédé pour éviter les fraudes sur un taxi équipé d'un taximètre électronique (1) possédant une position "libre" et une position tarifaire, qui est associé à une imprimante ayant pour rôle d'imprimer, à la fin de chaque course, un reçu destiné à être remis au client, ladite imprimante présentant au moins sa tête d'impression (20) mécaniquement dissociée du taximètre (1), mais lui étant électriquement connectée, caractérisé en ce qu'il consiste à détecter l'apparition d'une déconnexion de la tête d'impression (20) de l'imprimante par rapport au taximètre (1), et selon le cas :
◆ si la déconnexion est apparue alors que le taximètre est en position "libre", à interdire le passage ultérieur du taximètre en position tarifaire, tant que cette déconnexion perdure ;
◆ si la déconnexion est apparue alors que le taximètre est en position tarifaire, à déclencher une action anti-fraude.

## Description

### Domaine technique

L'invention se rattache au domaine des taximètres. Elle vise plus particulièrement un procédé destiné à éviter les fraudes sur les taximètres électroniques associés à une imprimante ayant pour rôle d'imprimer, à la fin de chaque course, un reçu destiné à être remis au client.

### Techniques antérieures

Les taximètres modernes sont des taximètres électroniques qui fonctionnent sous commande d'un microprocesseur qui est intégré au taximètre. Actuellement, les taximètres électroniques sont associés à une imprimante qui délivre un ticket à la fin de chaque course, ce ticket étant destiné au client afin qu'il reçoive un justificatif détaillé relatif au trajet qu'il vient d'effectuer en taxi.

Il existe des risques de fraude, si le chauffeur de taxi est tenté de faire payer à son client un prix différent de celui calculé par le taximètre, et qui figure sur le reçu.

La normalisation actuelle rend donc obligatoire la délivrance automatique de ce reçu à la fin de chaque course, et impose même le blocage du taximètre au cas où, lorsque l'on entame une course, l'imprimante n'est plus alimentée en papier.

Ainsi, on a décrit dans le document EP 0 880 111 un procédé perfectionné vérifiant que la quantité de papier encore présente sur le rouleau d'imprimante est suffisante pour l'impression du ticket de la course à venir. Plus précisément, ce procédé contrôle la quantité de papier restante lorsque le taximètre passe d'une position "libre", c'est-à-dire avant le début d'une course, à une position tarifaire, pendant laquelle le taximètre calcule le prix de la course, en fonction du temps et de la distance parcourue. Si cette quantité est insuffisante, cela provoque le blocage du taximètre, c'est à dire l'impossibilité de passer de la position "libre" à la position tarifaire.

Généralement, l'imprimante associée à un taximètre n'est pas complètement intégrée à l'intérieur du taximètre lui-même, pour faciliter les opérations de maintenance. En effet, la tête d'impression constitue un des organes les plus fragiles de l'imprimante, puisque c'est à ce niveau que le papier du ticket risque de se bloquer. La tête d'impression doit donc être facilement accessible pour permettre au chauffeur de taxi de débloquer le papier coincé, ou tout simplement remplacer le rouleau de papier vide.

Or, on sait que les taximètres comportent un boîtier qui est scellé ou plombé, et dont l'ouverture n'est autorisée que par les autorités en charge de la réglementation des taximètres. C'est pourquoi la tête d'impression, dont on a vu qu'elle constitue une partie sensible de l'imprimante, n'est généralement pas intégrée à l'intérieur de ce boîtier, mais généralement déportée à l'extérieur de ce dernier.

Plus précisément, la tête d'impression proprement dite est alors dissociée du taximètre, et reliée électriquement par un cordon électrique. Ce cordon assure l'alimentation électrique de la tête d'impression, et la transmission des signaux élaborés par le reste de l'imprimante, ou le microprocesseur du taximètre, pour permettre l'impression des différents caractères par la tête d'impression.

De la sorte, la tête d'impression peut facilement être remplacée en cas de panne, par la simple déconnexion du cordon approprié.

Or, on conçoit que la déconnexion volontaire de la tête d'impression empêche l'impression correcte du reçu en fin de course, et constitue donc un risque de fraude. C'est ce problème que se propose de résoudre l'invention.

### Exposé de l'invention

L'invention concerne donc un procédé pour éviter les fraudes sur un taxi équipé d'un taximètre électronique. Ce taximètre électronique est associé à une imprimante ayant pour rôle d'imprimer, à la fin de chaque course, un reçu destiné à être remis au client. Cette imprimante comporte au moins sa tête d'impression mécaniquement dissociée du taximètre, mais qui est électriquement connectée à ce dernier.

Conformément à l'invention, ce procédé se caractérise en ce qu'il consiste à détecter l'apparition d'une déconnexion de la tête d'impression de l'imprimante et du taximètre, et selon le cas :
◆ si la déconnexion est apparue alors que le taximètre est en position "libre", à interdire le passage ultérieur du taximètre en position tarifaire, tant que cette déconnexion perdure ;
◆ si la déconnexion est apparue alors que le taximètre est en position tarifaire, à déclencher une action anti-fraude.

En pratique, dans une première variante, l'action anti-fraude peut consister à neutraliser le taximètre, de sorte qu'il est ensuite nécessaire de briser le sceau d'inviolabilité du taximètre, et/ou de faire appel aux autorités en charge de la réglementation des taximètres pour ré-autoriser son fonctionnement.

Dans une autre variante, l'action anti-fraude peut consister à enregistrer la déconnexion dans un fichier journal ou une mémoire contenus dans le taximètre. Il s'agit alors par exemple d'un fichier d'anomalies qui est géré par le microprocesseur du taximètre. Ce journal ne peut être effacé que par les autorités et/ou après avoir brisé le sceau d'inviolabilité du taximètre. La trace de la déconnexion est donc ainsi conservée, ce qui permet aux autorités habilitées d'en prendre connaissance lors d'un contrôle. Des sanctions correspondantes peuvent ensuite prises en fonction de la réglementation.

L'action anti-fraude peut avantageusement avoir lieu lorsque le taximètre quitte ultérieurement la position tarifaire..

Autrement dit, le procédé conforme à l'invention consiste à gérer différemment la détection de l'absence de l'imprimante selon que l'on se trouve avant une course, ou pendant une course. Ainsi, si l'imprimante est débranchée alors que le taximètre est en position "libre", c'est-à-dire que la course n'a pas encore commencé, on autorisera le passage en position tarifaire, uniquement si l'imprimante est à nouveau connectée. Tant que l'imprimante reste débranchée, on n'autorisera pas le passage en position tarifaire, de sorte que la course ne pourra pas débuter dans des conditions non réglementaires.

A l'inverse, lorsque l'imprimante est débranchée alors que la course a déjà débuté, et que le taximètre est en position tarifaire, le taximètre continue à fonctionner normalement, de sorte que le prix calculé et affiché en fin de course ne subit pas l'influence de cette déconnexion.

Cependant, comme il a tout lieu de croire qu'une telle déconnexion correspond à une manoeuvre frauduleuse, elle produira un effet qui pourra engendrer des sanctions de la part des autorités en charge de la réglementation des taximètres. Ces sanctions peuvent être quasi immédiates si le taximètre est neutralisé, puisque le chauffeur sera obligé de faire appel à des autorités habilitées pour refaire fonctionner le taximètre normalement. Ces sanctions peuvent être différées ou potentielles, si l'apparition de la déconnexion est sauvegardée dans une mémoire ou un fichier journal qui ne peut être effacé que des personnels habilités. Cette mémoire ou ce fichier peuvent être examinés par ces personnels, par exemple lors d'un contrôle périodique ou inopiné ou encore en cas de plainte d'un consommateur.

Avantageusement dans ce cas d'inscription dans une mémoire ou dans un fichier l'action anti-fraude consistera en outre à faire apparaître une information sur un ticket de sorte à par exemple informer efficacement les services de contrôle.

La neutralisation peut intervenir par exemple lorsque le chauffeur de taxi cherchera à faire passer le taximètre en position "libre". La neutralisation peut aussi intervenir dès que le chauffeur a fait afficher le prix de la course par le taximètre, c'est-à-dire juste après qu'il ait effectué le passage en position "prix à payer" ou "dû". De préférence, on maintiendra de façon permanente l'affichage du prix de la course. Avantageusement cet affichage permanent du prix sera remplacé par un message d'erreur lorsque l'alimentation électrique du taximètre est interrompue . Il sera alors nécessaire de faire appel à des personnes habilitées à ouvrir les sceaux des boîtiers des taximètres pour réinitialiser un circuit de contrôle du microprocesseur, et réautoriser le fonctionnement normal. La fraude aura ainsi été détectée.

Avantageusement en pratique, la détection de la déconnexion de la tête d'impression d'imprimante pourra avoir lieu à des instants précis. Ainsi, pour surveiller les déconnexions alors que le taximètre est en position libre, la détection peut avantageusement avoir lieu lors de la demande de passage de la position "libre" à la position tarifaire. Pour la surveillance alors que le taximètre est en position tarifaire, la détection peut avoir lieu lors de la demande d'impression du ticket correspondant à la demande de passage de la position tarifaire à la position "prix à payer".

Autrement dit, il est possible de surveiller la bonne connexion de l'imprimante en permanence, mais il est suffisant et préférable de l'assurer aux moments critiques que sont la demande de passage en position "libre" à la position tarifaire, et lors de la demande l'impression du ticket, c'est-à-dire le passage en position "prix à payer". Une détection de l'absence de l'imprimante à cet instant peut par exemple en provoquer l'enregistrement par le microprocesseur dans un fichier journal, ou dans une zone mémoire particulière, ou bien encore par l'intermédiaire d'un relais présent sur une carte électronique du taximètre.

Avantageusement en pratique, le taximètre peut signaler l'apparition d'une déconnexion de la tête d'impression de l'imprimante. Ce signalement peut avoir lieu si cette détection apparaît pendant que le taximètre est en position "libre", ou s'il est en position tarifaire, ou bien encore dans les deux cas.

Avantageusement en pratique, cette signalisation peut avoir lieu soit par un affichage sur le cadran du taximètre, ou bien encore par l'émission d'un signal sonore d'un signal lumineux ou plus généralement d'un signal d'alarme.

Dans le cas où le signalement se fait sur le cadran d'affichage du taximètre, il est avantageux de ne pas provoquer l'effacement du montant de la course. Ce signalement peut être par exemple effectué par un pictogramme. Il peut aussi avoir lieu en intermittence avec ce dernier, selon une périodicité de l'ordre de une à quelques secondes. Dans les cas d'une déconnexion détectée lors du passage en position "dû", on peut également prévoir que l'affichage du prix soit figé pendant une durée prédéterminée, typiquement de l'ordre de quelques minutes. L'immobilité de l'affichage malgré les tentatives du chauffeur de passer en position "libre" est un indice visuel d'une tentative de fraude et permet d'avoir le prix affiché pendant que le chauffeur et le client de concluent la course .

En pratique, la détection de la déconnexion d'imprimante ou de sa tête d'impression peut être réalisée de différentes manières.

Ainsi, il est possible de surveiller des signaux générés par la tête d'impression, et envoyés à destination du reste de l'imprimante, ou du microprocesseur du taximètre. Ces signaux peuvent être des tops de retours de ligne, des signaux de synchronisation de caractères qui sont généralement échangés entre la tête d'impression et le reste de l'imprimante ou le circuit de commande de la tête d'impression.

On peut également surveiller des signaux qui sont émis par un module électronique présent dans la tête d'impression, en réponse à des signaux de surveillance générés par le reste de l'imprimante ou du taximètre.

Autrement dit, la tête d'impression peut alors être équipée d'un module électronique spécifique destiné à émettre des signaux attestant de la présence de la tête d'impression et donc de sa bonne connexion, sur requête du reste de l'imprimante ou du microprocesseur du taximètre.

La surveillance de la présence de la tête d'impression peut également être assurée par la surveillance de la consommation électrique de la tête d'impression. En cas d'absence de la tête d'impression, la consommation électrique, dont l'image est le courant absorbé par la tête d'impression, devient nulle, ou passe en dessous d'un seuil.

Le procédé conforme à l'invention peut également être adapté pour limiter d'autres risques de fraude. Ainsi, une autre façon de frauder consiste à supprimer le papier ou à mettre insuffisamment de papier dans l'imprimante pour imprimer un reçu. Pour éviter la fraude consistant à supprimer le rouleau de papier, un détecteur de présence de papier peut être incorporé dans l'imprimante et interdit au chauffeur d'entamer une course sans papier. Comme décrit dans le document EP 0 880 111, ce détecteur peut être amélioré pour éliminer les risques de fraude consistant à mettre suffisamment de papier pour actionner le détecteur mais insuffisamment pour imprimer un reçu.

Le procédé conforme à l'invention peut être adapté pour détecter non seulement le débranchement de l'imprimante mais également l'absence ou l'insuffisance de papier. Ainsi, avantageusement lorsque la vérification de l'alimentation de papier détecte une alimentation insuffisante (ou inexistante), le taximètre déclenche une action antifraude. Cette vérification peut avantageusement être opérée lors de la demande d'impression du ticket. Dans une forme spécifique, le déclenchement de l'action antifraude peut intervenir après une durée déterminée suffisante pour le remplacement du rouleau de papier. On laisse ainsi le temps au chauffeur de mettre en place un nouveau rouleau, lorsque le précédent a été effectivement totalement consommé, sans le pénaliser indûment.

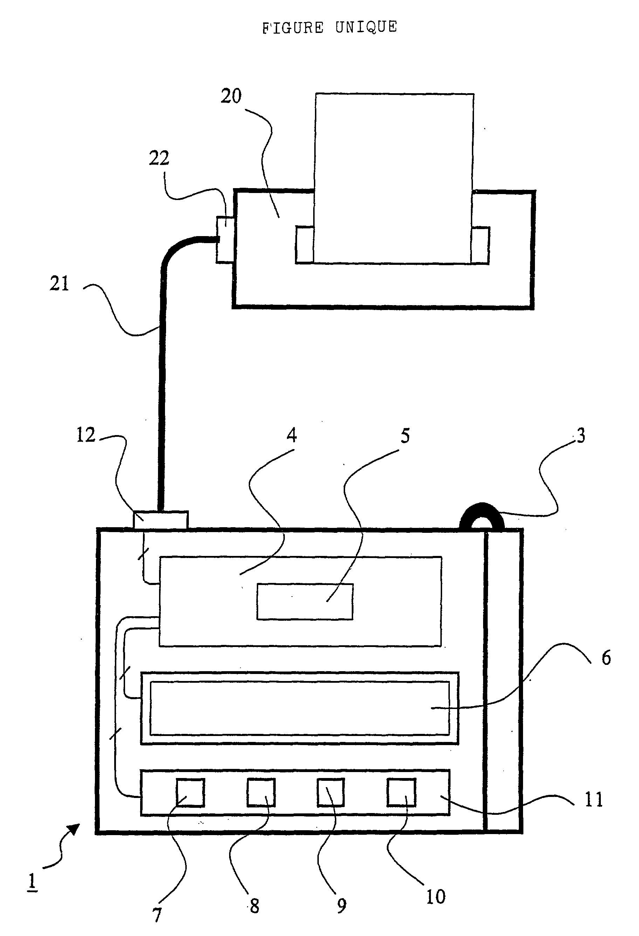

### Description sommaire de la figure

La manière de réaliser l'invention, ainsi que les avantages qui en découlent ressortiront bien de la description du mode de réalisation qui suit donné à titre d'exemple non limitatif, à l'appui de l'unique figure annexée, qui est un schéma simplifié d'un taximètre associé à une tête d'impression d'imprimante conformément à l'invention.

### Manière de réaliser l'invention

Le taximètre (1) illustré sur la figure unique est constitué d'un boîtier scellé (2), équipé d'un plombage (3) ou d'un dispositif analogue qu'il est nécessaire de détruire pour ouvrir le boîtier (2), et accéder aux éléments qu'il contient. De la sorte, les autorités en charge de la réglementation des taximètres, qui sont les seules habilitées à l'ouverture du boîtier des taximètres, peuvent vérifier qu'il n'a pas été ouvert d'une manière non autorisée.

Bien entendu, l'invention n'est pas limitée à une forme particulière de localisation de ce plombage tel qu'illustré sur la figure mais couvre au contraire toutes les variantes de réalisation.

De façon classique, le taximètre (1) est équipé d'une carte électronique (4) incluant un microprocesseur (5) ayant pour rôle de réaliser les différentes opérations de calcul et de contrôle du taximètre. Cette carte électronique (4) est reliée à un afficheur (6) permettant au chauffeur et au client de connaître différentes informations relatives au fonctionnement du taximètre telles que le type de tarif utilisé et le montant courant de la course par exemple. Bien entendu, d'autres informations peuvent également être affichées.

La carte électronique (4) le microprocesseur est également reliée à un ensemble de touches (7-10) ou un clavier permettant l'entrée d'informations de la part du chauffeur. Le nombre et le type d'informations peuvent être très variables en fonction de la réglementation du pays dans lequel le taximètre est utilisé. Parmi ces touches, une ou plusieurs sont notamment destinées à changer le mode de fonctionnement du taximètre.

Ainsi, de façon connue, un taximètre peut fonctionner selon différents modes. Un premier mode correspond à la situation dans laquelle le taxi est libre, et est prêt à accueillir un client pour débuter une course. Ce mode est généralement appelé position "libre" en France ou "for hire" dans les pays de langue anglaise. C'est dans cette position que se trouve le taximètre lorsque le client pénètre dans le taxi.

Le taximètre peut fonctionner selon d'autres modes pendant lesquels il comptabilise le temps et la distance parcourue. Ces modes sont généralement appelés "positions tarifaires". Ces positions peuvent être multiples, selon que la réglementation permet l'application de différents tarifs, par exemple les tarifs fonction de la période de la journée ou de la distance de la course. Ces positions tarifaires correspondent à un état dit "occupé" du taxi. Dans les pays de langue anglaise, cet état est généralement appelé "hired". Lorsque le chauffeur de taxi charge le client, et que la course commence, il actionne le bouton approprié du clavier (11) pour faire passer le taximètre en position tarifaire.

A l'inverse, lorsque la course est terminée, le chauffeur appuie sur une touche (8) généralement appelée "prix à payer" ou "dû". Dans les pays de langue anglaise, cet état est généralement appelé "time off'. Cette touche arrête la comptabilisation du prix de la course sur la base du temps et provoque l'affichage du prix à payer. Elle déclenche également l'impression du ticket. Ensuite, lorsque le montant a été réglé, il actionne la touche appropriée pour faire repasser le taximètre en position "libre".

Conformément à une caractéristique de l'invention, le taximètre est associé à une imprimante permettant l'impression du reçu. Plus précisément, dans la forme illustrée, la tête d'impression (20) de l'imprimante est mécaniquement dissociée du taximètre (1) proprement dit, pour faciliter par exemple les opérations de maintenance et de remplacement.

Cette tête d'impression (20) est reliée au taximètre (1) par un cordon (21) et un ou deux connecteurs (12, 22). L'enclenchement des connecteurs (12, 22) est verrouillé mécaniquement par un verrouillage, des ergots appropriés, un capot ou tout autre système équivalent qui évite une déconnexion intempestive. De la sorte, la déconnexion ne peut être que volontaire. Dans la forme illustrée, la gestion des fonctions d'impression est assurée directement par la carte électronique unique (4) du taximètre (1), ce qui permet de réduire le coût de l'ensemble. Néanmoins, l'invention couvre également les variantes dans lesquelles l'intégralité de l'imprimante est déportée, dès lors que le principe de l'invention est respecté, c'est-à-dire qu'il existe une liaison débrochable entre l'organe d'impression et le taximètre scellé. Il en va ainsi d'un taximètre possédant une première carte électronique principale, et une seconde carte électronique spécifique aux fonctions d'impression commandant une tête d'impression déportée.

En fonctionnement normal, la tête d'impression (20) est alimentée électriquement par le taximètre (1) via le cordon (21). Les différents signaux de commande des organes de la tête d'impression sont également envoyés par la carte électronique (4) à destination de la tête d'impression (20). De façon classique, la tête d'impression (20) renvoie à la carte électronique (4) des signaux correspondants à l'état de la tête d'impression (20). Il peut s'agir par exemple de l'information de retour de ligne, signifiant que le papier a été avancé d'une ligne, ou bien encore des signaux de synchronisation des caractères générés classiquement par une tête d'impression. Ainsi, la détection de la présence de l'imprimante peut être réalisée par la surveillance du bon retour d'informations de ce type.

La détection de la présence de l'imprimante peut également avoir lieu par la surveillance du courant d'alimentation de la tête d'impression (20). Ce courant d'alimentation peut par exemple être mesuré par la mesure de la tension présente aux bornes d'une résistance placée en série avec le circuit d'alimentation de la tête d'impression (20), ou plus généralement un circuit ampèremétrique.

Dans une forme d'exécution différente non illustrée, la tête d'impression peut comporter un module électronique spécifique, apte à émettre des signaux particuliers en direction de la carte électronique du taximètre. La détection de ces signaux reçus par la carte électronique signifie alors que la tête d'impression est effectivement connectée au taximètre. Dans le cas contraire, si de tels signaux ne sont pas reçus, cela signifie que l'imprimante a été déconnectée.

Ce module électronique spécifique monté dans la tête d'impression peut également générer des signaux en réponse à certains signaux qui seraient émis à cet effet par la carte électronique du taximètre.

D'autres variantes peuvent être envisagées, et sont couvertes par la présente invention, dès lors qu'elles permettent de détecter la présence et l'absence de la tête d'impression.

Conformément à l'invention, le taximètre gère de façon différenciée la détection de l'absence de l'imprimante selon le mode de fonctionnement du taximètre, c'est-à-dire le fait qu'il soit en position "libre" ou en position tarifaire.

Ainsi, si le chauffeur a déconnecté l'imprimante avant de prendre un nouveau client, c'est-à-dire lorsque le taximètre est en position "libre", il va ensuite tenter de passer en position tarifaire pour débuter la course. Dans ce cas, il appuiera sur la touche (7) appropriée du clavier (11). A ce moment, le microprocesseur (5) qui reçoit cette requête, lance un test de présence de la tête d'impression de l'imprimante selon un des modes décrits ci-avant. S'il s'avère que la tête d'impression est absente, il interdira le passage en position tarifaire, de sorte que la course ne pourra pas commencer. Bien que ce ne soit pas obligatoire, mais essentiellement ergonomique, le microprocesseur pourra afficher sur le cadran (6) un message indiquant l'absence d'imprimante ou un pictogramme.

Tant que l'imprimante n'est pas reconnectée, les tentatives ultérieures de passage en position tarifaire demeureront infructueuses. Si le chauffeur reconnecte l'imprimante, la prochaine tentative sera alors acceptée par le microprocesseur, et la course pourra commencer régulièrement.

L'invention n'est pas limitée à ce seul mode de fonctionnement dans lequel la détection de la présence de la tête d'impression est effectuée uniquement lors des demandes de passage en position tarifaire, mais le microprocesseur (5) peut également effectuer une détection de façon périodique, indépendamment des moments où le chauffeur actionne les touches (7-10) de changement de mode.

Par ailleurs, lorsque la course est commencée, et que le chauffeur a déconnecté l'imprimante pendant la course, le fonctionnement est différent. En effet, le taximètre (1) peut alors passer directement en « mode de neutralisation» comme exposé au paragraphe suivant ou bien continuer à fonctionner normalement pour que la course s'achève de telle manière que le montant total s'affiche bien sur le cadran (6). Au moment où le chauffeur appuie sur la touche (8) commandant le passage en position "prix à payer" et donc l'impression du ticket, bien qu'il sache pertinemment que l'impression ne sera pas possible puisqu'il a préalablement débranché l'imprimante, le microprocesseur (5) lance un test de détection de présence de la tête d'impression. Si ce test indique l'absence de l'imprimante, le microprocesseur (5) mémorise l'information. Après que le chauffeur ait informé son client que l'impression n'a pas fonctionné convenablement et qu'il ne peut donc fournir de reçu, il appuie sur la touche appropriée pour faire passer le taximètre en position "libre".

Dans ce cas, le microprocesseur (5) fait passer le taximètre dans un mode particulier, dit "mode de neutralisation". Dans ce mode, plus aucune opération n'est possible sous l'action du clavier, et il n'est donc pas possible d'effectuer des courses de façon régulière.

Autrement dit, si le chauffeur souhaite se mettre en règle avec la réglementation, il lui sera nécessaire de demander l'intervention des autorités habilitées à ouvrir les boîtiers du taximètre, pour ré-initialiser le microprocesseur (5). Bien entendu, cette intervention engendre des formalités administratives, et éventuellement des sanctions qui sont de nature à dissuader le chauffeur de procéder à des déconnexions de la tête d'impression.

L'invention couvre également les variantes dans lesquelles la neutralisation intervient dès que le chauffeur demande le passage en position "prix à payer", après toutefois que le taximètre ait affiché le montant total du prix de la course. Dans ce cas, on préfère que le montant total de la course reste affiché suffisamment longtemps, par exemple quelques minutes, pour que d'une part le client puisse voir et acquitter le prix de la course, et d'autre part que le client suivant s'aperçoive d'un fonctionnement anormal, puisque le chauffeur ne pourra pas faire passer le taximètre en position "libre". Selon une réalisation avantageuse, au bout de quelques minutes, un message d'erreur sera affiché pour éviter toute utilisation du taximètre.

Il est également possible d'assurer une détection de la présence de la tête d'impression indépendamment des actions du chauffeur sur le clavier. Ainsi, une détection périodique de la présence de l'imprimante peut être assurée par le microprocesseur (5). Si ce test révèle que l'imprimante est absente alors que le taximètre est en position tarifaire, l'information peut alors être mémorisée, et provoquer automatiquement la neutralisation du taximètre lors d'une demande ultérieure de passage en position "libre", ou le passage en position "prix à payer".

Comme décrit précédemment, la déconnexion de l'imprimante alors que le taximètre est en position tarifaire peut provoquer l'affichage sur le cadre du taximètre d'un message correspondant, éventuellement en intermittence avec l'affichage du montant courant de la course.

Le signalement de l'absence de l'imprimante peut également avoir lieu, comme déjà évoqué, par un signal sonore, lumineux, ou tout autre sorte de signal d'alarme.

Comme évoqué ci avant, la neutralisation n'est pas la seule action anti-fraude prévue dans le procédé conforme à l'invention. Ainsi, elle peut être remplacée par la sauvegarde de l'apparition de la déconnexion dans un fichier journal ou dans une mémoire prévue à cet effet. L'effacement de cette information n'est possible qu'en accédant à l'intérieur du taximètre en brisant le sceau d'inviolabilité ou encore par un système de clef électronique détenue par les personnes habilitées, en particulier les autorités en charge de la surveillance des taximètres. Cette clef peut être un simple mot de passe communiqué au microprocesseur au moyen par exemple du clavier (11) ou un dispositif qui est qui est reconnu par le microprocesseur ou tout autre moyen connu pour assurer une identification. Par exemple sur les taximètres équipés d'un lecteur de carte magnétique la clef peut être une carte avec un contenu particulier Ainsi, un contrôle effectué par des personnes habilitées fait apparaître la tentative de fraude, et peut engendrer des sanctions.

Avantageusement les autorités en charge de la surveillance des taximètres auxquelles il faut faire appel en cas de neutralisation du taximètre utiliseront pour mettre fin à la neutralisation les mêmes moyens que ceux décrits au paragraphe précédent pour effacer le fichier journal ou la mémoire.

Il ressort de ce qui précède que le procédé conforme à l'invention permet de limiter les risques de fraudes par déconnexion de la tête d'impression. Il autorise toutefois le remplacement de la tête d'impression lorsque le taximètre est en position "libre", ce qui constitue une opération non constitutive de fraude, dès lors qu'elle est achevée avant le passage en position tarifaire.

En revanche, la déconnexion de la tête d'impression pendant une course, qui est une manoeuvre anormale, généralement frauduleuse, provoque quant à elle soit directement la neutralisation du taximètre, soit l'enregistrement de la tentative de fraude et donc des sanctions potentielles.

## Revendications

1. Procédé pour éviter les fraudes sur un taxi équipé d'un taximètre électronique (1) possédant une position "libre" et une position tarifaire, qui est associé à une imprimante ayant pour rôle d'imprimer, à la fin de chaque course, un reçu destiné à être remis au client, ladite imprimante présentant au moins sa tête d'impression (20) mécaniquement dissociée du taximètre (1), mais lui étant électriquement connectée, **caractérisé en ce qu'**il consiste à détecter l'apparition d'une déconnexion de la tête d'impression (20) de l'imprimante par rapport au taximètre (1), et selon le cas :
◆ si la déconnexion est apparue alors que le taximètre est en position "libre", à interdire le passage ultérieur du taximètre en position tarifaire, tant que cette déconnexion perdure ;
◆ si la déconnexion est apparue alors que le taximètre est en position tarifaire, à déclencher une action anti-fraude.

2. Procédé selon la revendication 1, **caractérisé en ce que** l'action anti-fraude consiste à neutraliser le taximètre, de sorte qu'il est ensuite nécessaire de briser un sceau et/ou de faire appel aux autorités en charge de la surveillance des taximètres pour ré-autoriser le fonctionnement du taximètre neutralisé

3. Procédé selon la revendication 1, **caractérisé en ce que** l'action anti-fraude consiste à sauvegarder l'apparition de la déconnexion dans un fichier journal ou une mémoire contenus dans le taximètre, et qu'il n'est pas possible d'effacer sans briser un sceau et/ou sans faire appel aux autorités en charge de la surveillance des taximètres.

4. Procédé selon la revendication 1 ou 3 **caractérisée en ce que** l'action anti-fraude consiste en outre à faire apparaître une information sur un ticket.

5. Procédé selon la revendication 1, **caractérisé en ce que** la neutralisation du taximètre intervient lorsque celui-ci quitte ultérieurement la position tarifaire,

6. Procédé selon la revendication 1, **caractérisé en ce que** la détection d'une déconnexion de la tête d'impression (20) de l'imprimante a lieu au moins lors de la demande de passage de la position "libre" à la position tarifaire.

7. Procédé selon la revendication 1, **caractérisé en ce que** la détection d'une déconnexion de la tête d'impression (20) de l'imprimante a lieu au moins lors de la demande d'impression du reçu.

8. Procédé selon la revendication 1, **caractérisé en ce que** si la déconnexion apparaît alors que le taximètre est en position "libre", celle-ci est signalée par le taximètre.

9. Procédé selon la revendication 1, **caractérisé en ce que** si la déconnexion apparaît alors que le taximètre est en position tarifaire, celle-ci est signalée par le taximètre.

10. Procédé selon la revendication 8 ou 9, **caractérisé en ce que** la signalisation a lieu par affichage sur le cadran (6) du taximètre, ou l'émission d'un signal d'alarme.

11. Procédé selon les revendications 9 et 10, **caractérisé en ce que** la signalisation de la déconnexion a lieu en alternance avec l'affichage du montant de la course.

12. Procédé selon la revendication 1, **caractérisé en ce que** la déconnexion de la tête d'impression de l'imprimante est détectée par la surveillance de signaux envoyés par la tête d'impression (20) à destination du reste de l'imprimante ou du taximètre.

13. Procédé selon la revendication 12, **caractérisé en ce que** les signaux surveillés sont des tops de retours de ligne ou des tops de synchronisation de caractère.

14. Procédé selon la revendication 12, **caractérisé en ce que** les signaux surveillés sont des signaux émis par un module électronique présent dans la tête d'impression, en réponse à des signaux de surveillance générés par le reste de l'imprimante ou du taximètre.

15. Procédé selon la revendication 1, **caractérisé en ce que** la déconnexion de l'imprimante est détectée par la surveillance de la consommation électrique de la tête d'impression.

16. Procédé selon la revendication 1, **caractérisé en ce que** l'on adopte, pour le ou les connecteurs de branchement de la tête d'impression, des connecteurs mécaniquement sécurisés pour ne pouvoir être débranchés que volontairement.

17. Procédé selon la revendication 1, **caractérisé en ce qu'**il consiste en outre à vérifier l'alimentation en papier de la tête d'impression, et à déclencher l'action antifraude dans le cas où cette alimentation est insuffisante pour permettre l'impression correcte du reçu.

18. Procédé selon la revendication 17, **caractérisé en ce que** la vérification de l'alimentation en papier est effectuée lors de la demande d'impression du reçu.

19. Procédé selon la revendication 17, **caractérisé en ce que** la vérification de l'alimentation en papier permet de détecter l'absence du rouleau de papier associé à la tête d'impression.

20. Procédé selon la revendication 19, **caractérisé en ce que** la vérification de l'alimentation en papier permet de détecter que la longueur de papier présent sur le rouleau est suffisante pour permettre l'impression totale du reçu.

21. Procédé selon la revendication 19, **caractérisé en ce que** le déclenchement de l'action antifraude a lieu postérieurement à la vérification, après l'écoulement d'une durée prédéterminée suffisante pour le remplacement du rouleau de papier.
